# EUROPEAN PATENT APPLICATION

(11) **EP 1 879 106 A2**
(43) Date of publication of application: **16.01.2008**
(21) Application number: 07003034.1
(22) Date of filing: 13.02.2007
(51) Int. Cl.: G06F 9/44

(54) **Source code generation method, apparatus and program**

(30) Priority: 12.05.2006 JP 2006134503
(71) Applicant: HITACHI SOFTWARE ENGINEERING CO., LTD., Yokohama-shi, Kanagawa 230-0045 (JP)
(72) Inventor: Fukuda, Hidenori Hitachi Software Eng. Co., Ltd, Shinagawa-ku Tokyo 140-0002 (JP)
(74) Representative: Liesegang, Roland

(57) **Abstract**

A source code is generated efficiently without the need to newly create a script each time a function is added or a request is made to change a function on the part of a device in which a generated source code is utilized, thereby reducing the cost for the development of a script. A method includes a first step of reading from a script file a plurality of scripts for generating a source code, a second step of generating a source code adapted to each script by executing the scripts that have been read, a third step of analyzing each of the source codes that have been generated, and a fourth step of combining the source codes that have been analyzed while sharing a redundant portion thereof, thereby outputting a combined source code.

## Description

### BACKGROUND OF THE INVENTION

### 1. Field of the Invention

The present invention relates to a source code generating method and apparatus and a source code generating program suitable for, e.g., the efficient generation of a source code for programs implemented in a cellular phone or the like.

### 2. Background Art

A source code generating system is known in which a prototype called "script" or "template" is defined by the user in advance, wherein the prototype is read and certain regions or specific substitution text strings in the script are substituted by parameters managed by the source code generating system, thus allowing the source code generating system to output a source code in a format to which the system is not normally adapted.

In this system, when a source code for a subroutine for controlling a database is to be generated, for example, a macro text is described, as a substitution marker, in the script where a type is designated or a determination process is described. The macro text is then substituted by a user-defined type name and a determination source code component. In this way, the source code generating system can output a source code for controlling a database item having a type to which the system does not conform.

There is also a source code generating system disclosed in Patent Document 1 in which a template and program design information are combined to output a source code.

Patent Document 1: JP Patent Publication (Kokai) No. 2004-362442 A

### SUMMARY OF THE INVENTION

In the conventional source code generating system in which a script or template is utilized to output a source code, it is possible to create different source codes from one script or template by defining in advance a plurality of type names and determination source code components.

However, because in this system a macro text string in the script or template is simply substituted by a user-defined type name and determination source code component, the system cannot handle cases where it becomes necessary to add a new function on the side on which the generated source code is utilized. In such cases it is necessary to newly create a script or template adapted to the new function, which leads to an increase in the development cost for the script or template and reduced efficiency.

For example, during the development of a source code for a program to be implemented on a cellular phone, if it becomes necessary to add a new function combining function A and function B on the part of the cellular phone, a script or template adapted to the new function must be newly generated, resulting in an increase in the development cost for the source code to be implemented on the cellular phone.

In this case, it is plausible to utilize part of the script by including other scripts. However, this would require the adjustment of the contents of output based on a mutual understanding between both sides, namely, the including side and the included side, as to what source code is to be outputted by each, upon generating a script for each side. If the adjustment of the output contents is insufficient, problems may arise, such as redundancy or mismatch in the output source codes.

It is an object of the invention to provide a source code generating method, apparatus, and program whereby a necessary source code can be generated efficiently without the need to create a new script in response to the addition of or a request to modify a function on the part of the device that utilizes the generated source code, thus helping to reduce the development cost for the script.

In order to achieve the aforementioned object, in one aspect, the invention provides a method for generating a source code using a script, including:
a first step of reading from a script file a plurality of scripts for generating a source code;
a second step of generating a source code adapted to each script by executing the scripts that have been read;
a third step of analyzing each of the generated source codes; and
a fourth step of combining the source codes that have been analyzed while sharing a redundant portion thereof, thereby outputting a combined source code.

The fourth step may include modifying, before sharing the redundant portion, the output format of each source code analyzed in the third step, in accordance with a modify rule defined by the user.

The second step may include setting, before generating the source code adapted to each of the scripts read from the script file, a parameter for each script for changing the content that is outputted.

In another aspect, the invention provides an apparatus for generating a source code using a script, including:
a first means for reading from a script file a plurality of scripts for generating a source code;
a second means for generating a source code adapted to each script by executing the scripts that have been read;
a third means for analyzing each of the source codes that have been generated; and
a fourth means for combining the source codes that have been analyzed while sharing a redundant portion thereof, thereby outputting a combined source code.

The fourth means may include means for modifying, before sharing the redundant portion, the output format of each source code analyzed by the third means, in accordance with a modify rule defined by the user.

The second means may include means for setting, before generating the source code adapted to each of the scripts read from the script file, a parameter for each script for changing the content that is outputted.

In another aspect, the invention provides a program for causing a computer to create a source code using a script, including steps for causing the computer to function as:
a first means for reading from a script file a plurality of scripts for generating a source code;
a second means for generating a source code adapted to each script by executing the scripts that have been read;
a third means for analyzing each of the source codes that have been generated; and
a fourth means for combining the source codes that have been analyzed while sharing a redundant portion thereof, thereby outputting a combined source code.

The present invention provides the following effects:
(1) For example, by reading a script for function A and a script for function B, generating a source code adapted to each, analyzing the source codes, and then combining them while sharing a redundant portion thereof, namely, by combining the scripts of functions A and B, which are individually managed on a function unit basis, it becomes possible to create and output a source code having a new function quite easily.
   Thus, the need to create a new script each time a new function is added or a request is made to change a function on the part of the device in which a generated source code is utilized can be eliminated, so that a source code for a new function can be quite easily generated. As a result, reusability of the script can be enhanced, and the cost for development, correction, and maintenance of source code can be reduced.
(2) By modifying the format in which a source code is outputted by a script, in accordance with a user definition, a single script can be widely reused and it becomes possible to reduce redundant development work, such as generating a number of scripts having only partial difference in output fonnat.
(3) By delivering a user-set parameter to the script and having a necessary source code outputted by the logic on the part of the script, it becomes possible to utilize a single script for the output of a variety of target source codes. For example, when only the screen size of a cellular phone is changed, the need to create a new script adapted to the new screen size can be eliminated by setting in the script the size of a display component adapted to the new screen size as a parameter. In this way, changes in screen size and the like can be efficiently dealt with.

### BRIEF DESCRIPTION OF THE DRAWINGS

Fig. 1 shows a hardware diagram of a source code generating apparatus according to an embodiment of the invention.
Fig. 2 shows a functional block diagram functionally illustrating the internal processes of a source code generator program.
Fig. 3 shows examples of script stored in a script file.
Fig. 4 shows an example of parameter data stored in a parameter file.
Fig. 5 shows an example of how the parameter data set in the parameter file 6 is stored in a memory.
Fig. 6 shows an example of a modify rule stored in a modify rule file.
Fig. 7 shows a flowchart of the sequence of a script reading process.
Fig. 8 shows a flowchart of the sequence of a parameter data generating process.
Fig. 9 shows a flowchart of the sequence of a script execution process.
Fig. 10 shows an example source code generated from the script shown in Fig. 3.
Fig. 11 shows a flowchart of the sequence of an output source code analysis process.
Fig. 12 shows examples of the analyzed generated source code corresponding to the scripts shown in Fig. 3.
Fig. 13 shows a flowchart of the sequence of a modify rule reading process.
Fig. 14 shows a flowchart of the sequence of a source code modification process.
Fig. 15 shows a flowchart of the sequence of a source code combining process.
Fig. 16 shows an example of a combined generated source code outputted by the combining process.
Fig. 17 shows a flowchart of the sequence of a source code output process.
Fig. 18 shows an example of script for generating a source code to be implemented in a cellular phone.
Fig. 19 shows another example of script for generating a source code to be implemented in a cellular phone.
Fig. 20 shows examples of a display screen of a cellular phone that is displayed by generating a source code by setting values set by a GUI designer as parameter data and then executing the source code.

### DESCRIPTION OF PREFERRED EMBODIMENTS

In the following, a source code generating apparatus according to an embodiment of the invention is described.

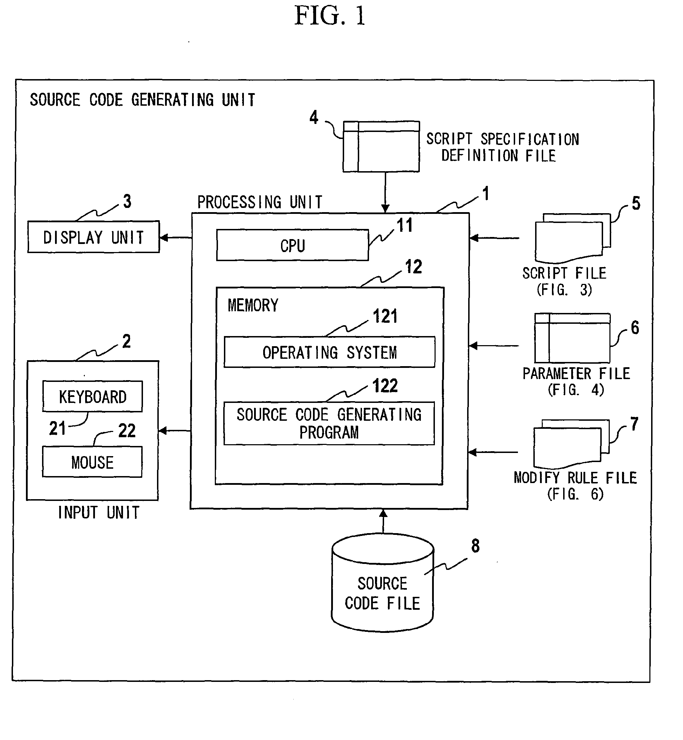

Fig. 1 shows a hardware block diagram of the source code generating apparatus according to the present embodiment.

The source code generating apparatus includes a processing unit 1 consisting of a computer, an input unit 2 consisting of a keyboard 21 and a mouse 22, a display unit 3, a script specification definition file 4, a script file 5, a parameter file 6, a modify rule file 7, and a source code file 8.

The processing unit 1 includes a CPU 11 and a memory 12. The memory 12 stores an OS (operating system) 121 and a source code generator program 121.

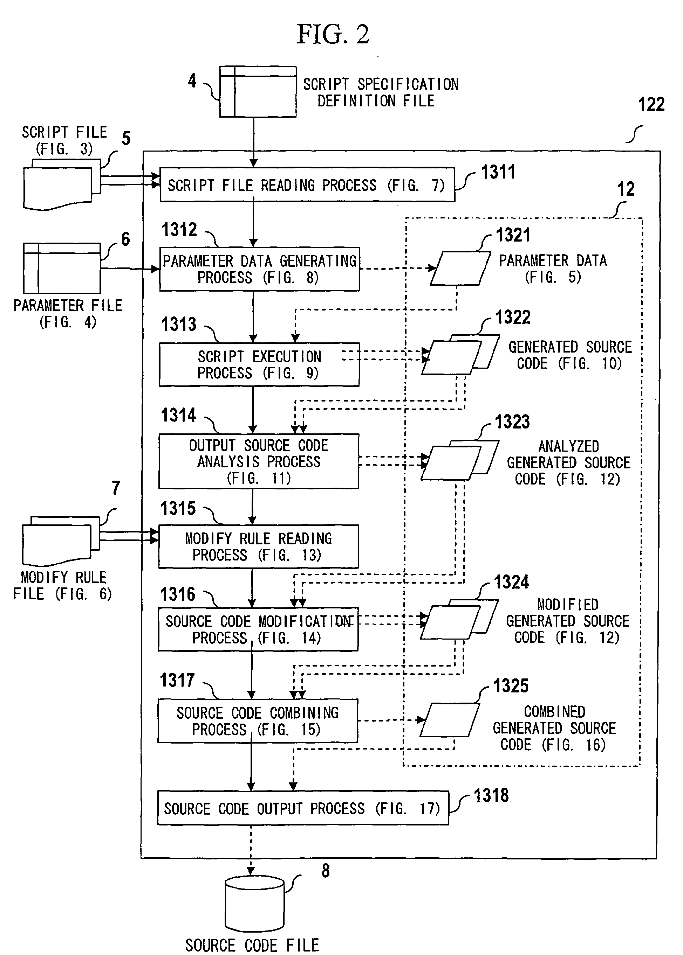

Fig. 2 shows a functional block diagram functionally illustrating the internal processes of the source code generator program 122. The source code generating program 122 is composed of a script reading process 1311, a parameter data generating process 1312, a script execution process 1313, an output source code analysis process 1314, a modify rule reading process 1315, a source code modification process 1316, a source code combining process 1317, and a source code output process 1318. The program receives inputs from a plurality of script files 5, a plurality of items of parameter data 1321 from the parameter file 6 that is expanded on the memory 12, and a plurality of modify rule files 7. The program either inserts a newly generated source code into a source code file 8 or outputs a new source code.

Of the data generated during the operation of the source code generating apparatus of the present embodiment, the data generated in the memory 12 includes parameter data 1321, a generated source code 1322, an analyzed generated source code 1323, a modified generated source code 1324, and a combined generated source code 1325.

In the script specification definition file 4, the specification of script functions that can be used by the source code generating apparatus are stored.

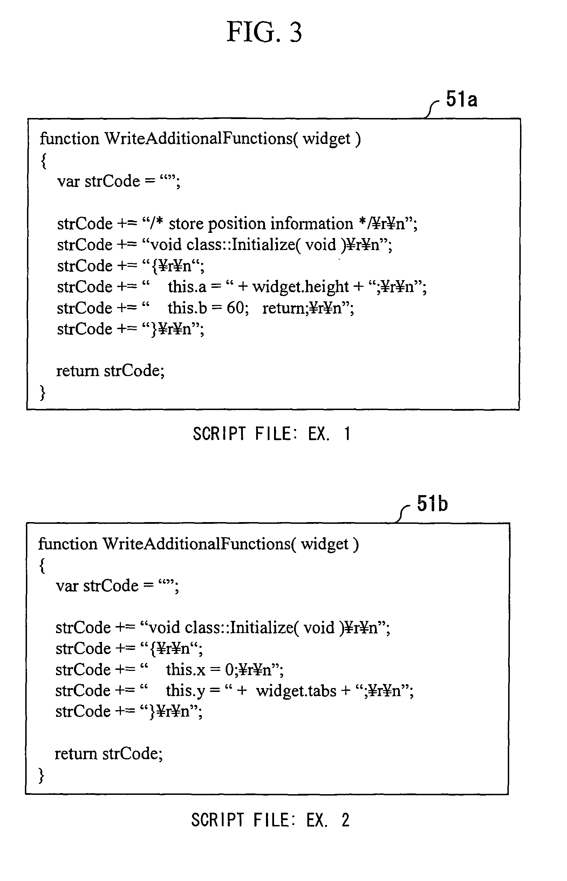

In the script file 5, scripts generated by the user in advance on a specific function unit basis are stored. The stored scripts are edited such that they can be executed by the script execution process 1313. Examples of the scripts stored in the script file 5 are shown in Fig. 3 with reference numerals 51a and 51b.

The scripts indicated by numerals 51a and 51b are scripts for generating a source code for, e.g., determining the position, shape, and color of components (contents) to be displayed on the screen of a cellular phone. In the drawing, they correspond to the descriptive portions for the acquisition and storage of position information about the width or height of components. The difference between the illustrated scripts lies in whether 'a' and 'b' or 'x' and 'y' are used as the variable names of position information.

In the parameter file 6, information used in the source code generator process is set by the user in advance before the source code generating process is executed. Such information includes values, text string, class name, names of signs or constants that are entered by the user on the source code, name of a file that is outputted, and whether the output is valid or invalid, for example.

Such parameter data stored in the parameter file 6 is read by the parameter data generating process 1312 when the source code generating process is executed, and is then expanded within the memory 13 as parameter data 1321.

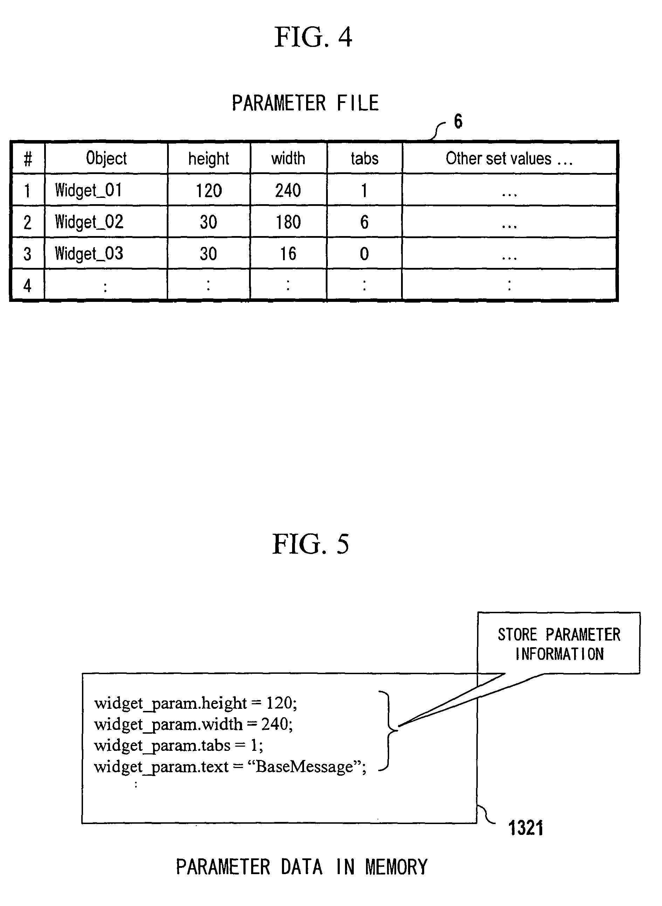

Fig. 4 shows an example of the parameter data set in the parameter file 6.

The illustrated parameter data consists of a plurality of lines of data items such as object, height, width, tabs, and other set value.

A function that is used in the script for generating a source code is set as object. Set values used in the function are set as height, width, and tabs.

When generating source codes for cellular phones having different screen sizes, for example, a source code adapted to each screen size can be generated from the same script by setting parameter data adapted to each screen size. Even if the screen size is changed, a source code that can be used in the cellular phone after screen size change can be generated by acquiring the new screen size from the parameter data and setting it in the existing, original script.

The parameter data set in the parameter file 6 is read by the parameter data generating process 1312 and stored in the memory 12 in a configuration as shown in Fig. 5.

In the modify rule file 7, a defined modify rule used in the present source code generating apparatus, a modify rule deriving from the program language specification, and a user-defined generation rule, for example, are stored in advance in a format such that they can be used by the modify rule reading process 1315.

The modify rule is used to modify the source code generated by the source code generating apparatus such that it conforms to the language specification of the source code or interface used in each of the cellular phones A and B. The modify rule is set for the cellular phones A and B individually by the user.

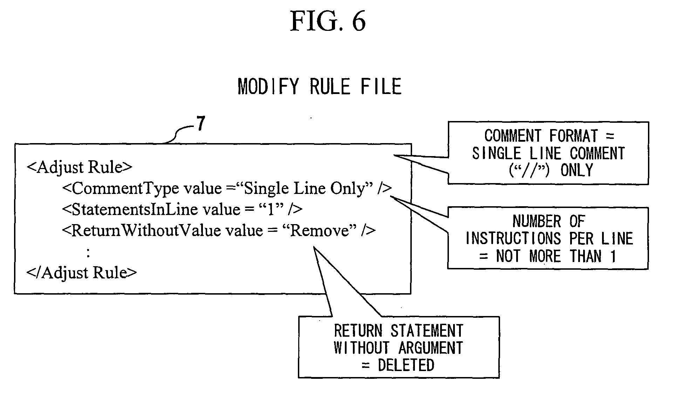

An example of the modify rules stored in the modify rule file 7 is shown in Fig. 6.

The illustrated modify rule is an example of a defined modify rule used in the source code generating apparatus. The rule specifies that the comment format is limited to a single line comment ("//"), the number of instructions per line is not more than 1, and a return statement without argument is deleted, for example.

In the source code generating apparatus of the present embodiment, one or more scripts are read, and user-defined parameter data is set in those scripts. Then, the scripts are executed by a script engine provided in OS 121 so as to create a source code. The thus generated source code is divided into token units, and syntax semantic analysis is carried out. The source code that has been thus analyzed is modified in accordance with the user-defined modify rule in terms of comment format or the number of instructions per line. The thus modified source code 1324 is then output.

In this case, if a plurality of scripts are entered, the redundant portions of the modified source codes and adapted to each script are mutually combined and then outputted.

Regarding the generated source code 1322, analyzed generated source code 1323, modified source code 1324, and combined generated source code 1325, a plurality of items of data might be simultaneously processed during the process of generating a single source code. In the present embodiment, two different generated source codes 1322 are obtained from two scripts, and they are eventually outputted in the form of a single combined generated source code 1325.

In the following, each of the processes such as the script reading process is described in detail by referring to a flowchart.

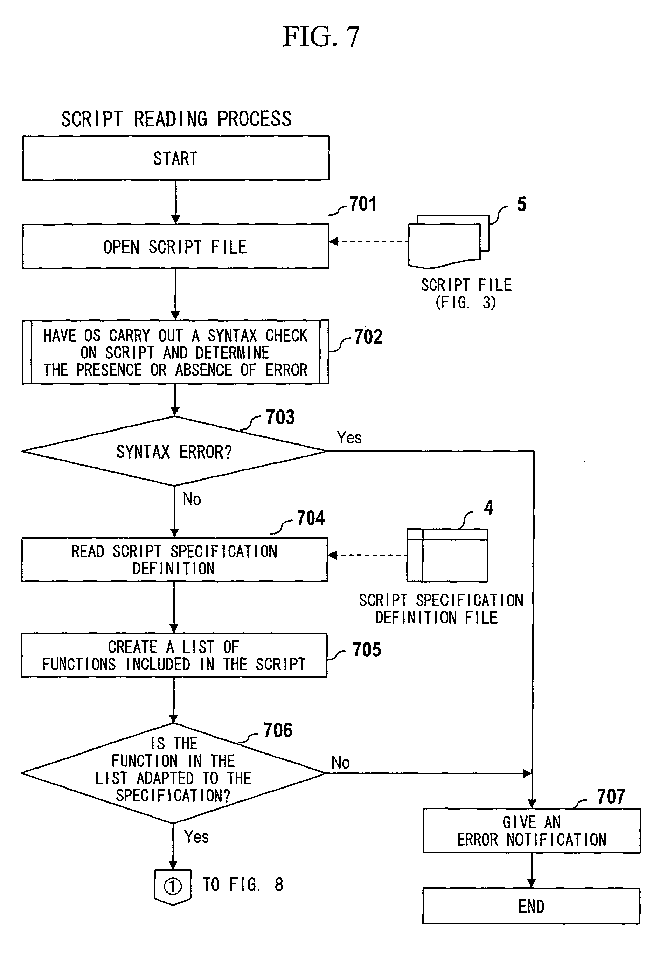

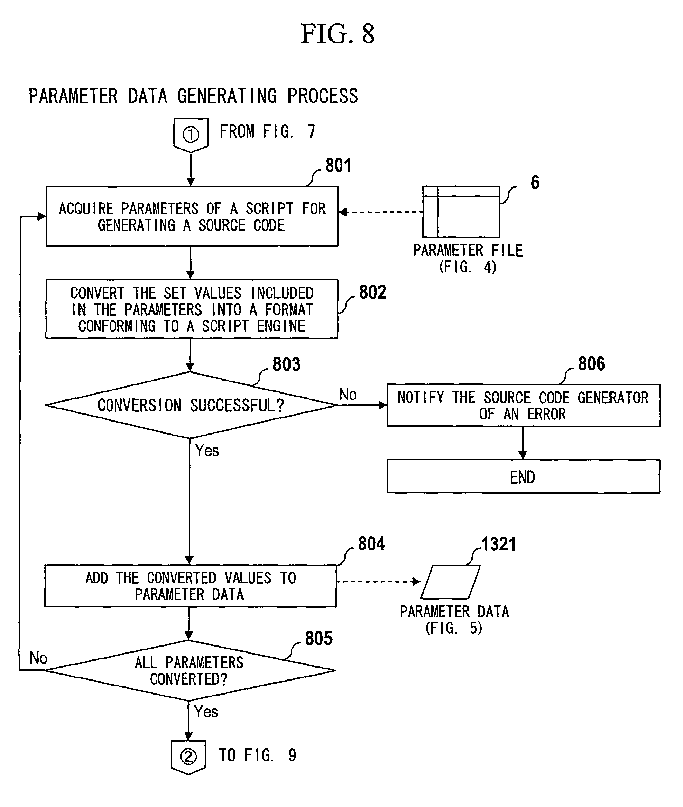

Fig. 7 shows a flowchart of the sequence of the script reading process 1311.

The script reading process 1311 is activated upon entry of a source code generation start command via the keyboard 21.

Upon activation, the script reading process 1311 starts reading the two script files 51 a and 51 b shown in Fig. 3, for example, one by one, and then carries out the following process.

The script file that has been read is opened (step 701), and the script is subjected to syntax check by OS 121 so as to determine the presence or absence of an error (step 702). Based on the result of the syntax error check from OS 121, the presence or absence of syntax error is determined (step 703).

If there is a syntax error, an error notice is displayed on the display unit 3 to alert the user (step 707).

If there is no syntax error, the specification of the script function determined by the specification of the source code generating apparatus is read from the script specification definition file 4 (step 704), and a list of functions included in the script is generated (step 705).

Then, it is determined whether or not a function included in the script conforms to the specification read from the script specification definition file 4 (step 706). If not, an error notice is displayed on the display unit 3 to alert the user (step 707).

If the function conforms to the specification, the routine proceeds to the parameter data generating process 1312.

Fig. 8 shows a flowchart of the sequence of the parameter data generating process 1312.

In the parameter data generating process 1312, the parameter data about the script for generating a source code generation is acquired from the parameter file 6 (step 801).

Then, the format of the set values included in the parameter data is converted to a format in which it can be utilized by the script engine of OS 121 (step 802).

It is then determined whether or not the conversion has been successful (step 803). If not, an error notice is displayed on the display unit 3 to alert the user (step 806).

If the conversion has been successful, the converted values are stored in the memory 12 in the form of parameter data 1321 as shown in Fig. 5 (step 804).

Thereafter, it is determined whether or not all of the parameter data has been converted (step 805). If it has all been converted, the routine proceeds to the script execution process. If not, on the other hand, the routine returns to step 801 and the same process is repeated by reading the next parameter data from the parameter file 6.

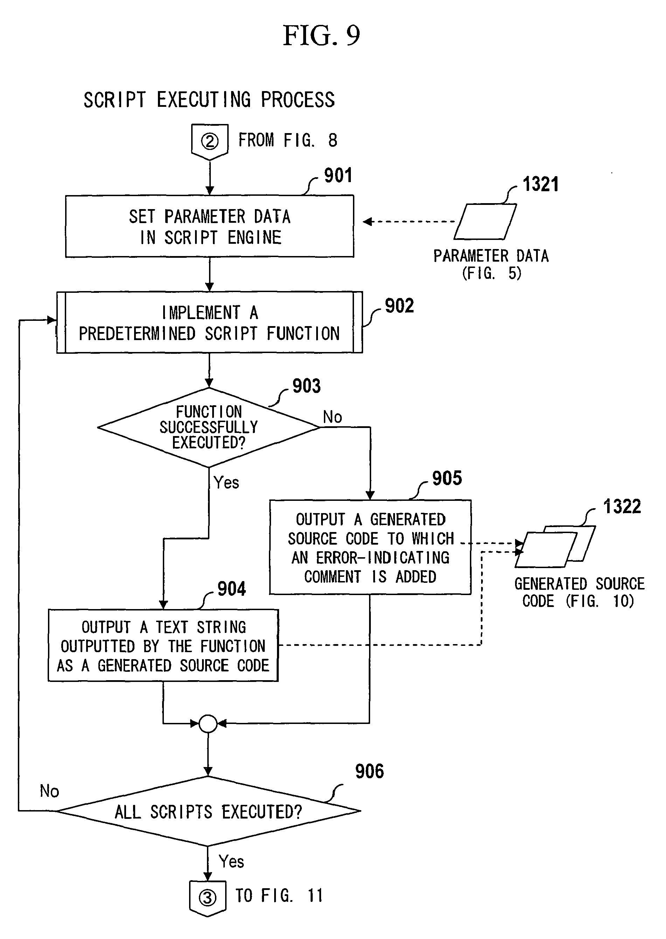

Fig. 9 shows a flowchart of the sequence of the script execution process 1313.

In the script execution process 1313, the parameter data 1321 stored in the memory 12 is set in the script engine of OS 121 (step 901), and a predetermined script function is executed (step 902). The "predetermined script function" herein refers to a function for converting the script that has been subjected to syntax error check into a source code after setting the parameter data 1321.

It is then determined whether or not the execution of the script has been successful (step 903). If it has been successful, the text string outputted by the script engine is outputted as a generated source code 1322 (step 904). If it has not been successful, a generated source code 1322 is outputted to which an error-indicating comment is added.

Thereafter, it is determined whether or not all of the scripts read from the script file 5 have been executed (step 905). If they have been, the routine proceeds to the output source code analysis process 1314. If not, the routine returns to step 901 and the same process is repeated.

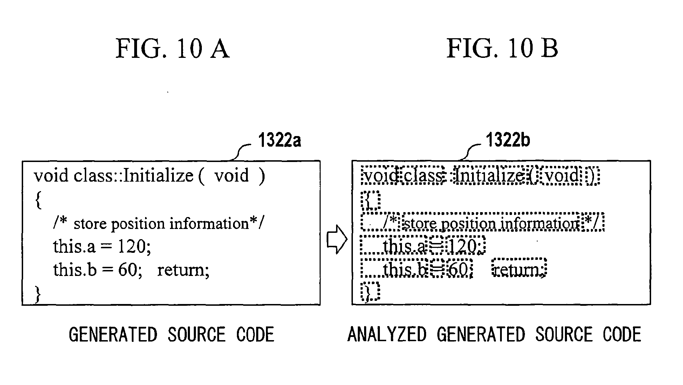

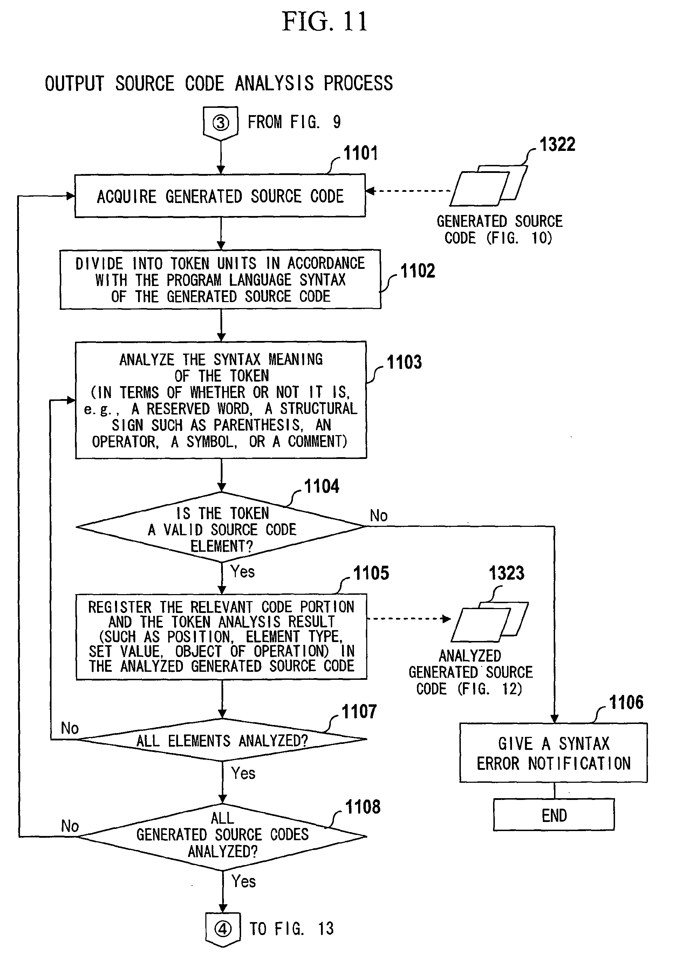

Through the above processes, a source code 1322a shown in Fig. 10(a) is generated from the script shown in Fig. 3 (51a).

Fig. 11 shows a flowchart of the sequence of the output source code analysis process 1314.

In this output source code analysis process 1314, the generated source code 1322 is acquired (step 1101) and divided into token units in accordance with the program language syntax of the generated source code (step 1102). Namely, the generated source code 1322a shown in Fig. 10(a) is divided into token units enclosed by the dotted lines in Fig. 10(b).

Then, the token units are analyzed individually in accordance with the program language syntax so as to determine whether the syntax meaning of the token corresponds to a reserved word, a structural symbol such as a parenthesis, an operator, a symbol, or a comment, for example. In this way, the contents of the source code outputted by the single script are interpreted in terms of semantics, form, and text structure such as the line break position and space character, for example (step 1103).

It is then determined whether or not the token is a valid source code element (step 1104). If it is not a valid source code element, the presence of syntax error is indicated on the display unit 3 so as to alert the user (step 1106), and then the process ends.

The above-described processes for semantic analysis of the token and determination as to whether or not it is a valid source code element are based on known art, and will not therefore be described in detail.

Then, source code element portions as valid token outputs and the result of token analysis (position, type of element, set values, object of operation, etc.) are registered in the memory 12 as an analyzed generated source code 1323 (step 1105).

It is then determined whether or not all of the source code elements of the tokens have been analyzed (step 1107). If not, the routine returns to step 1103 and the same process is repeated.

If all of the source code elements have been analyzed, it is then determined whether or not all of the generated source codes 1322 have been analyzed. If not, the routine returns to step 1101 and the same process is repeated.

If they all have been analyzed, the routine proceeds to the modify rule reading process 1315.

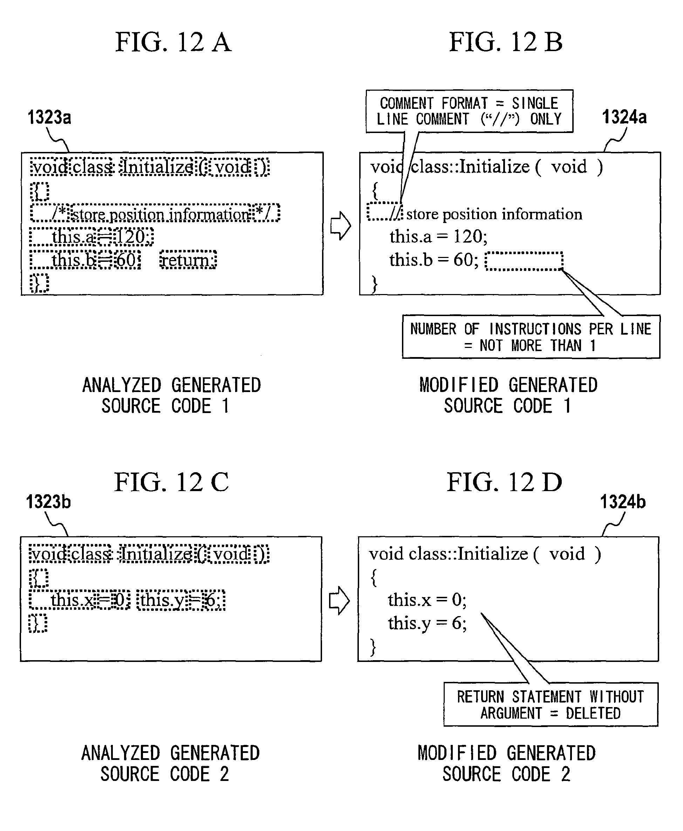

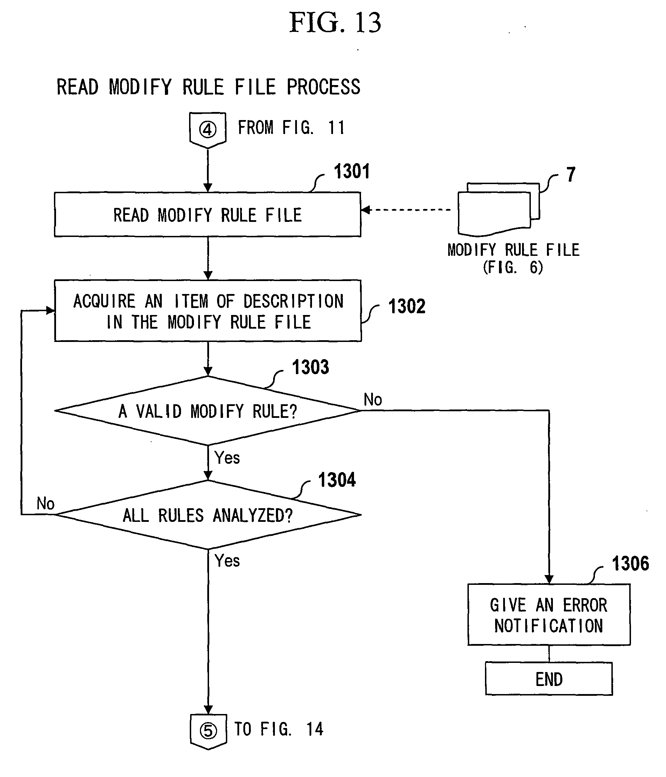

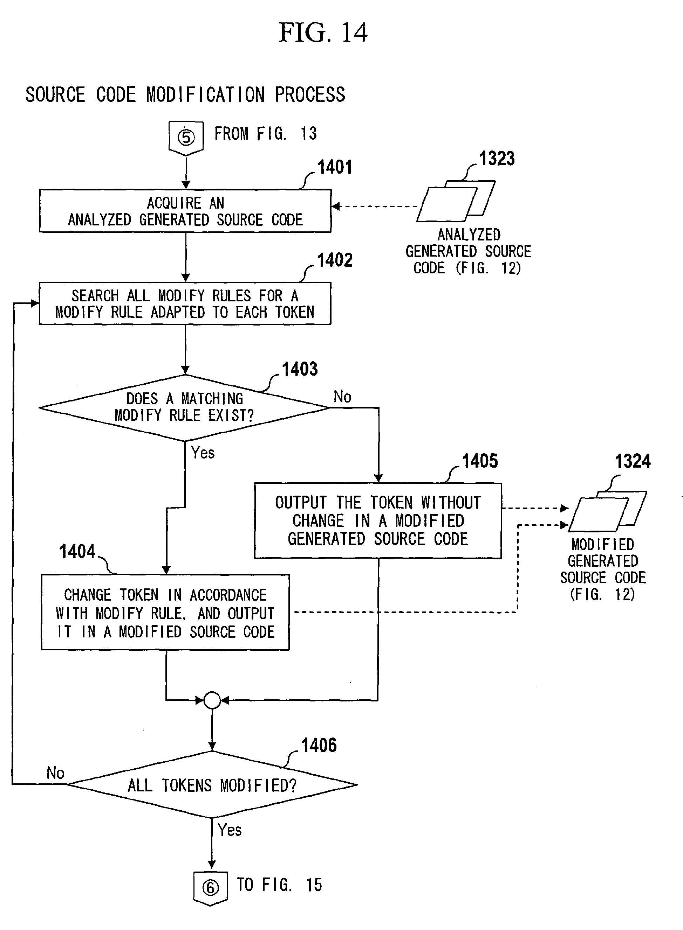

Through the above-described processes, the scripts (51a) and (51b) shown in Fig. 3 are registered in the memory 12 as analyzed generated source codes 1323a and 1323b, as shown in Fig. 12(a) and (c).

Fig. 13 shows a flowchart of the sequence of the modify rule reading process 1315.

In this modify rule reading process 1315, the modify rule as shown in Fig. 6 is read from the modify rule file 7 (step 1301).

As the modify rule, a plurality of patterns may be utilized, such as a rule deriving from the syntax of the source code language, a user-defined rule deriving from the rules of a particular development project, a rule deriving from the specification of the present source code generating apparatus, and so on.

There are many examples of the rule deriving from the syntax of the source code language, such as one specifying that when the object is C language, comment is converted into a comment block enclosed between "/*" and "*/"; one specifying that in the case of C++ language, a comment block "//" is outputted; one that specifies the number of instructions per line; or one that would delete the return statement at the end of a function.

Examples of the user-defined rule include one that specifies a modification of the position of an indent or a line break of a brace "{" following an if clause on the source code, and one that specifies the automatic addition of an initializing code to NULL in the event that a code outputted by a script does not initialize a pointer variable in accordance with an initialization rule upon declaration of the variable.

The rule deriving from the specification of the source code generating apparatus includes various examples, such as one that specifies a change to a path on an appropriate folder upon the output of a declaration of a include file. These are merely examples and it goes without saying that the rules that can be implemented with the present invention are not limited to these.

Then, one item of the described contents of the modify rule file is acquired (step 1302).

For example, one of the modify rules of Fig. 6, such as one concerning the comment format, is acquired.

It is then determined whether or not the acquired rule is a valid modify rule (step 1303). If it is not a valid modify rule, an error message is displayed on the display unit 3 so as to alert the user before ending the routine (step 1306).

Whether or not the rule is valid is determined by the specification of the present system that is specified by hard coding.

It is then determined whether or not all of the rules described in the modify rule file 7 have been analyzed (step 1304). If not, the routine returns to step 1302 and the same process is repeated.

If they all have been analyzed, the routine proceeds to the source code modification process 1316.

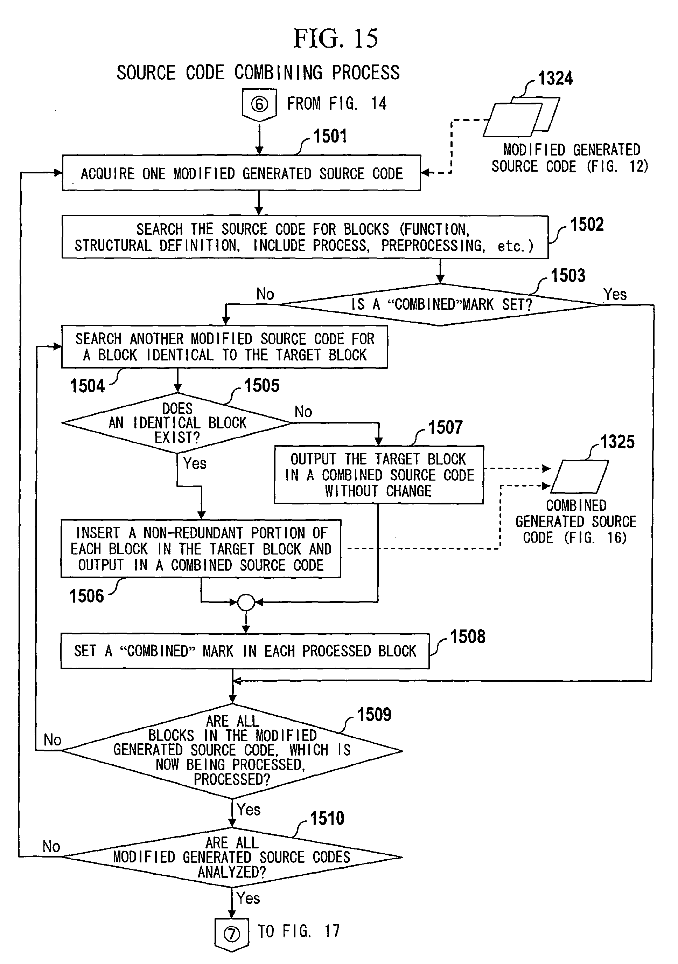

Fig. 14 shows a flowchart of the sequence of the source code modification process 1316.

In the source code modification process 1316, an analyzed generated source code 1323 is acquired (step 1401), and the entire modify rules of which validity has been checked are searched for a modify rule for each token (step 1402).

Then, it is determined whether or not there exists, with respect to individual tokens, a modify rule that is adapted to the analyzed generated source code 1323 (step 1403). If it does, a relevant token in the analyzed generated source code 1323 is modified in accordance with the modify rule, and then the code is outputted as a modified generated source code 1324 (step 1404).

However, if no adapted modify rule exists, the code is outputted as a modified generated source code 1324 without changing the token (step 1405).

It is then determined whether or not all of the tokens have been modified (step 1406). If not, the routine returns to step 1402 and the same process is repeated.

On the other hand, if all of the tokens have been processed, it is then determined whether or not all of the elements in the analyzed generated source code 1323 have been analyzed (step 1407). If not, the routine returns to step 1401 and the same process is repeated.

If all of the tokens have been modified, the routine proceeds to the source code combining process 1317.

When the modification is completed by the source code modification process 1316 as specified by the modify rule file 7, a modified source code 1324 is obtained.

As a result of the modification process, the analyzed generated source codes 1323a and 1323b shown in Fig. 12 (a) and (c) are rendered into modified generated source codes 1324a and 1324b, as shown in Fig. 12(b) and (d).

The text strings enclosed by dotted lines in Fig. 12(a) and (b) indicate individual tokens.

Of these, Fig. 12 shows that the token "/*" in Fig. 12(a) indicating a comment format is modified by the modify rule into a token having only a single line comment "//", and that the token of a return statement "return;" with no argument is deleted.

The figure also shows that, while the token of a statement setting values for variables x and y in Fig. 12(c) is described in one line, it is modified into a one-instruction-per-line format by the modify rule, as shown in Fig. 12(d).

Fig.15 shows a flowchart of the sequence of the source code combining process 1317.

In this source code combining process 1317, redundant portions, such as identical units of process or identical process blocks, that exist in the modified generated source codes 1324a and 1324b, which are generated from a plurality of scripts 51a and 51b, are combined for output.

Namely, one item of the modified generated source code 1324, such as the modified generated source code 1324a that is modified as shown in Fig. 12(c), for example, is acquired (step 1501), and the source code 1324a is searched for blocks of function, structure definition, include process, preprocessing, and so on (step 1502).

It is then determined whether or not a "combined" mark has been set for the retrieved blocks (step 1503). If it has been, the routine proceeds to step 1509.

If it has not yet been set, another modified source code 1324b is searched for a block identical to the relevant block (step 1504).

It is then determined whether or not an identical block exists (step 1505). If it does, non-redundant portions of each block are inserted into the relevant block, which is then outputted as a combined source code 1325 (step 1506).

If no identical block exists, the object block is outputted as a combined source code 1325 without change (step 1507).

A "combined" mark is then set for each of the processed blocks (step 1508), and it is determined whether or not all of the blocks in the modified generated source code 1324a have been processed (step 1509). If not, the routine returns to step 1504 and the same process is repeated.

If all of the blocks have been processed, it is determined whether or not the modified generated source codes 1324a and 1324b have all been analyzed (step 1510). If not, the routine returns to step 1501 and the same process is repeated.

If the codes have all been analyzed, the routine proceeds to the source code output process 1318.

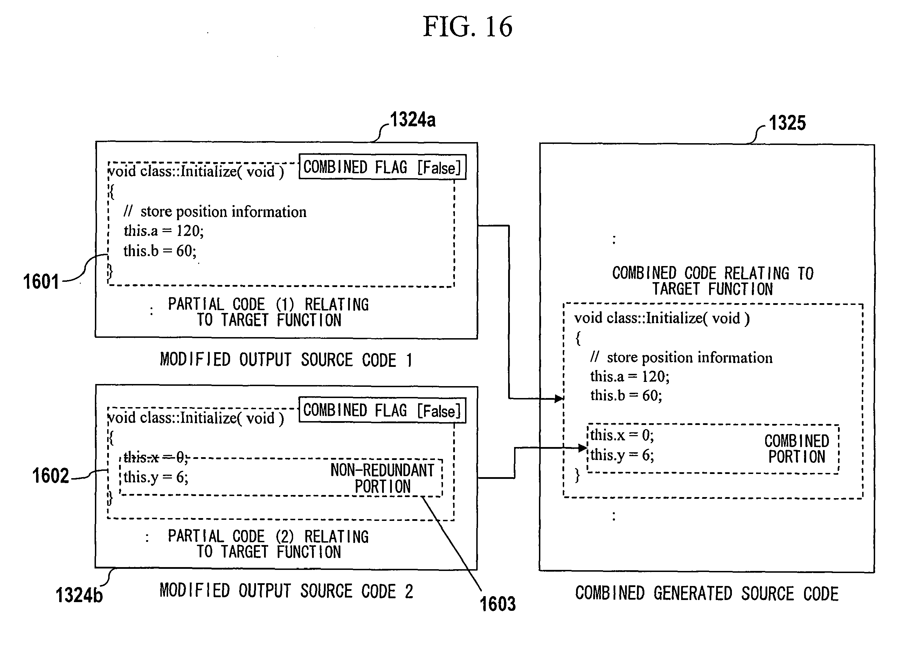

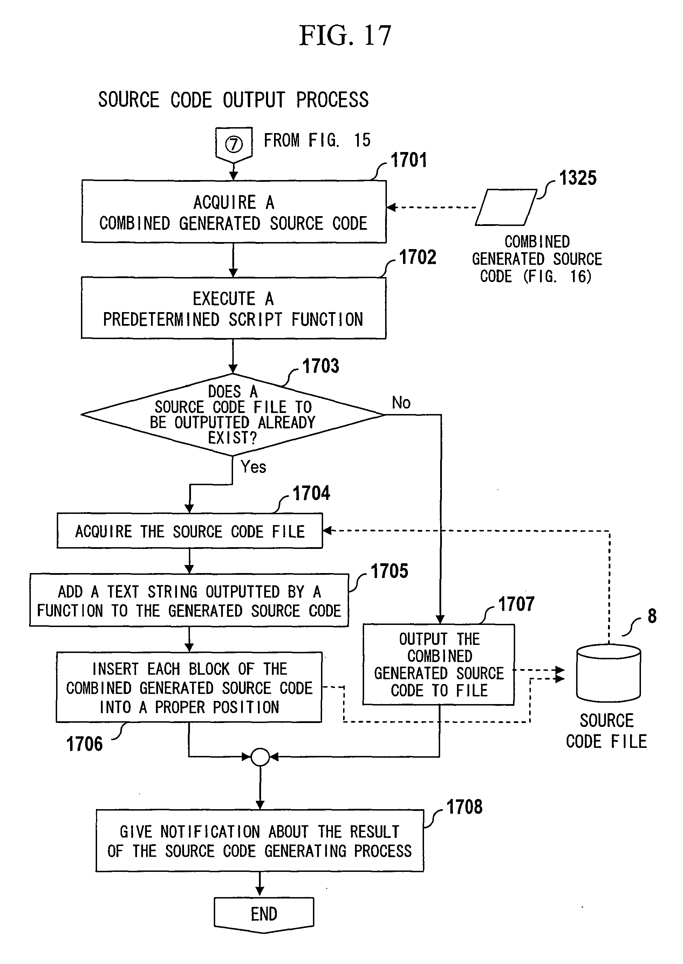

By such combining process, the modified generated source codes 1324a and 1324b shown in Fig. 12 (b) and (d) are made common through the combining of the redundant portions of partial codes 1601 and 1602 where identical processes are carried out, as shown in Fig. 16. The thus combined codes are then outputted as a combined generated source code 1325 in which a non-redundant portion 1603 is inserted.

In steps 1504 to 1506, a redundant portion and a non-redundant portion are examined as follows before the combining.

Namely, after extracting from the modified source codes 1324a and 1324b the partial codes 1601 and 1602 pertaining to identical processes, a redundant portion of these codes is determined. A non-redundant portion is obtained from one of the codes by using the other code as a reference. In the example of Fig. 16, a non-redundant portion 1603 that is not included in the partial code 1601 is acquired from the partial code 1602, using the partial code 1601 as a reference. Such comparison may not be necessarily based on a simple text string comparison; namely, it is also possible to utilize the result of structural analysis performed by a source code analyzer. By determining redundancy based on the result of structural analysis, it becomes possible to avoid the problem of false determination caused by differences that do not affect the source code, such as differences in terms of a space character or a line break, thereby allowing a more accurate combining process.

It should be noted that in the present invention, the differential compassion process is not limited to the above-described method or any other particular method. After the determination of a redundant portion is completed, a combined generated source code 1325 pertaining to a target function is obtained in which a partial code 1601 pertaining to the target function and a partial code 1602 pertaining to an identical process are combined without the redundant portion.

While the foregoing description has been based on a case involving two partial codes pertaining to the target function of the objects for combining, it is also possible to obtain a combined generated source code when there are three or more partial codes pertaining to the same process, by repeating the aforementioned process.

The combined generated source code 1325 is outputted by the source code output process 1318 to the source code file 8 either as a new output or in such a way as to be merged with an output source code that has been generated by the previous generation process.

The source code file 8 may be either an existing file or a new file. When outputting to an existing source code file, decision information pertaining the to insertion positions of comment, function name, line number, and so on, is set in advance in a format compatible with the present source code generating apparatus.

Fig. 17 shows a flowchart of the sequence of the source code output process 1318.

In the source code output process 1318, a combined generated source code 1325 is acquired (step 1701), and a script function that is predetermined by the script specification definition file 4 is carried out (step 1702).

It is then determined whether or not a source code file to be outputted already exists (step 1703). If it does, its source code file is acquired (step 1704), and the text string outputted by the function in step 1702 is added to the generated source code (step 1705). Each block of the combined generated source code 1325 is inserted into an appropriate position in the existing source code file (step 1706).

Then, the result of the source code output process is displayed on the display unit 3 so as to inform the user (step 1708).

If there is no existing source code file, a source code file 8 is newly generated, and each block of the combined generated source code 1325 is newly stored in the file (step 1708).

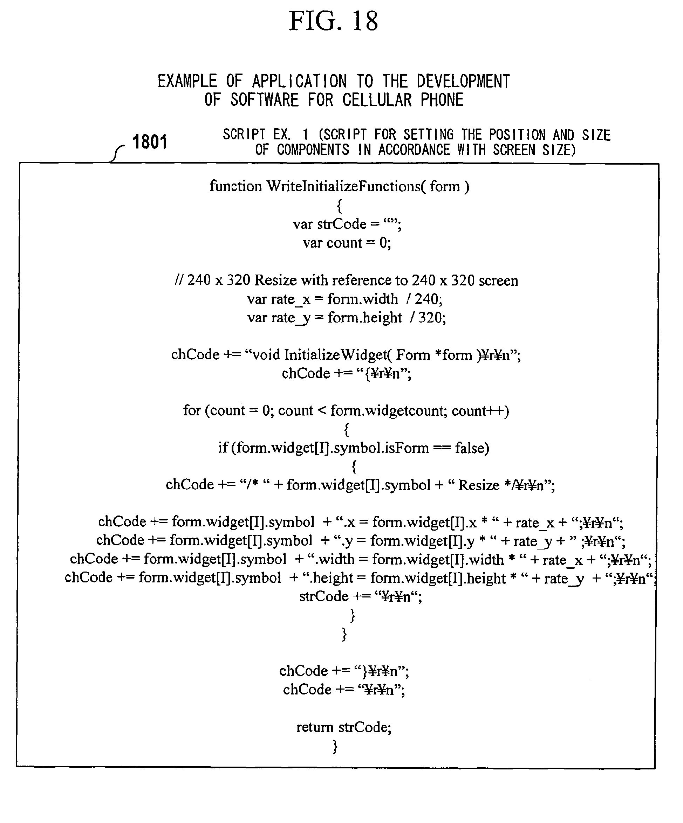

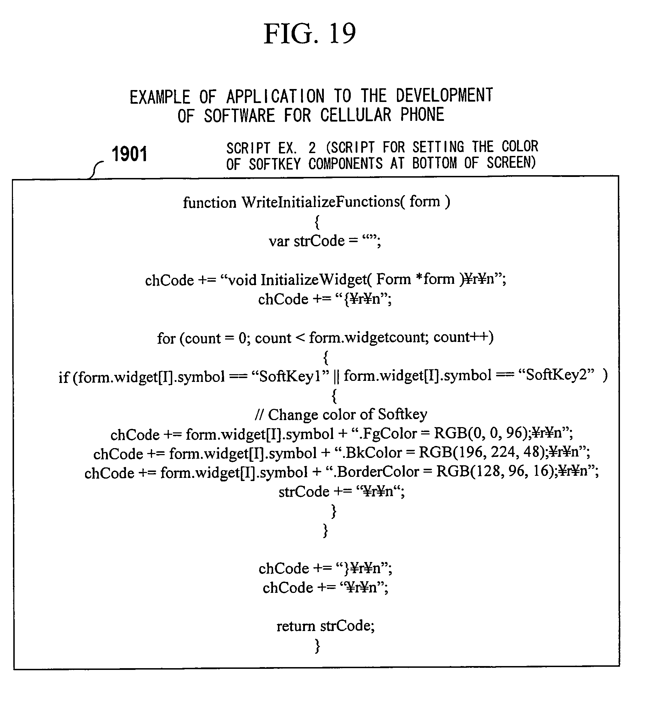

Figs. 18 and 19 show examples of scripts when generating a source code to be implemented in a cellular phone.

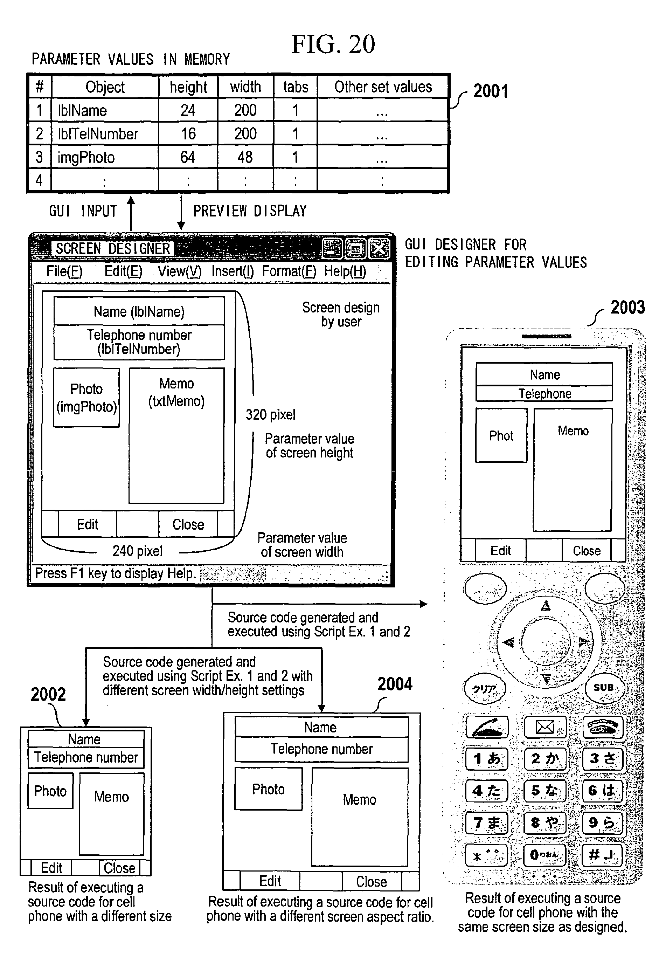

These examples concern scripts for generating source codes for programs for displaying cellular phone screens based on parameter data obtained from a result of screen design by GUI shown in Fig. 20.

In these examples, source codes are outputted on the basis of a script example (1) 1801 shown in Fig. 18 and a script example (2) 1901 shown in Fig. 19.

The script example (1) 1801 is a script for adding a process for automatically changing the position and size of all of the components on the screen in accordance with the screen width and height that are set in the parameter file 3 as parameter data.

The script example (2) 1901 is a script for setting a background color or the like of key guide components at the bottom of the screen.

Development of software for cellular phones usually must take into account the different screen sizes of various types of devices in which a program actually runs. In conventional source code generating apparatuses, the parameters that can be used within the script were inflexible. As a result, it has been necessary to prepare coordinate parameters individually for each component of every expected screen size, or to prepare a script or template for each component. This led to the problem of increased amounts of work required for the preparation of the parameters or script Further, when a plurality of scripts are to be simultaneously applied, it has been necessary to ensure consistency among the source codes that are outputted, resulting in an exponential increase in the number of combinations as the number of scripts increases, thus making generation, maintenance, and reuse difficult

In the present source code generating apparatus, as shown in Fig. 20, values set by the GUI designer are set as parameter data 2001, and the parameter data is set by a script execution process 1313 in scripts 1801 and 1901.

In this way, it becomes possible to utilize any parameter values on the part of the scripts 1801 and 1901, thus making it possible to output source codes capable of a variety of processes based on a single script.

For example, data concerning all components on the screen can be processed in terms of an arrangement of parameter data in the script example (1) 1801. Thus, customized source codes for a plurality of screens having different numbers of components can be generated on the basis of a single script.

Even when the content of each component or the number of components in a screen is not known in advance, it becomes possible to easily create a script for outputting a source code targeted for a necessary component alone by incorporating a script decision logic or a loop logic.

Further, even when the output results of scripts interfere with each other, source codes can be appropriately integrated by means of the output source code analysis process 1314, modify rule reading process 1315, source code modification process 1316, and source code combining process 1317 of the present source code generating apparatus.

Thus, each script can output a necessary code without having to consider the output result of each other.

In the examples of Figs. 18 and 19, the script example (1) 1801 and the script example (2) 1901 output functions of the same name, Initialize Widget. However, because the redundant portion is removed by the source code combining process 1317, no syntax error arises in the source code that is outputted. Thus, it is possible to freely combine scripts generated on an individual function basis, such as in terms of size change, color setting, and character setting, as needed. Consequently, enhanced efficiency of generation, maintenanceability, and reusability can be obtained.

Fig. 20 shows an example 2003 of execution of the source code generated by applying the scripts without changing the parameters. Namely, this schematically shows a result of outputting the designed screen as a source code without change and then executing it. In the case of this example, the screen 2003 is displayed on the cellular phone which is identical to the design result.

Another example 2002 (Fig. 20) of source code is generated by applying the script after changing the parameters of screen width and height in accordance with the parameter data set in the parameter file 3. This is an example of execution of the source code that has been re-generated for a cellular phone having a different screen size.

By the process in the script example (1) 1801, the position and size of each component is automatically halved, thereby maintaining a screen design in accordance with the user's intension. The script example (2) 1901 is also simultaneously made valid without interference, so that the color of the components at the bottom is correctly set.

Yet another example 2004 of the source code has been generated by applying the script while changing the parameter value of screen height. In this example, the screen height alone is changed. The y coordinate and height of each component alone are appropriately changed by the script example (1) 1801, and the color setting for the bottom portion is also made valid without interference with the script example (1) 1801.

As will be seen from the foregoing description, in accordance with the source code generating apparatus of the present embodiment, the script of function A and that of function B, for example, are read, and source codes adapted to each are individually generated and analyzed. The codes are then combined while making redundant portions common. Thus, by combining the scripts of functions A and B, which are individually managed on a function unit basis, a source code having a new function can be very easily generated and outputted.

This makes it possible to eliminate the need to create a new script each time a new function is added or a request for a change in function is made on the part of the device in which the generated source code is utilized. Thus, a source code with a new function can be extremely easily generated, resulting in an improvement in script reusability and a decrease in the cost for the development, correction, and maintenance of source code.

Particularly, when generating a source code to be implemented in devices in fields where new products are developed one after another, such as in the field of cellular phones, necessary scripts can be freely combined to automatically output an appropriate source code. As a result, productivity is enhanced, the amount of work to be expended by development personnel can be reduced, and thus overall cost for development can be significantly reduced.

By modifying the format in which the source code is outputted by the script in accordance with user definitions, a single script can be widely reutilized, so that it becomes possible to reduce the amount of redundant development work, such as generating a number of scripts with only partial difference in output format.

Furthermore, by delivering the parameters set by the user to the script and having a necessary source code outputted by the logic on the part of the script, it becomes possible to utilize a single script for the output of various target codes. For example, if the screen size of the cellular phone alone is changed, the need to create a new script adapted to the new screen size can be eliminated by setting the size of display components adapted to the new screen size in the script as parameters. Thus, changes in screen size and the like can be efficiently dealt with.

## Claims

1. A method for generating a source code using a script, comprising:
a first step of reading from a script file a plurality of scripts for generating a source code;
a second step of generating a source code adapted to each script by executing the scripts that have been read;
a third step of analyzing each of the generated source codes; and
a fourth step of combining the source codes that have been analyzed while sharing a redundant portion thereof, thereby outputting a combined source code.

2. The method for generating a source code according to claim 1, wherein the fourth step comprises modifying, before sharing the redundant portion, the output format of each source code analyzed in the third step, in accordance with a modify rule defined by the user.

3. The method for generating a source code according to claim 1 or 2, wherein the second step comprises setting, before generating the source code adapted to each of the scripts read from the script file, a parameter in each script for changing the content that is outputted as a source code.

4. An apparatus for generating a source code using a script, comprising:
a first means for reading from a script file a plurality of scripts for generating a source code;
a second means for generating a source code adapted to each script by executing the scripts that have been read;
a third means for analyzing each of the source codes that have been generated; and
a fourth means for combining the source codes that have been analyzed while sharing a redundant portion thereof, thereby outputting a combined source code.

5. The apparatus for generating a source code according to claim 4, wherein the fourth means comprises means for modifying, before sharing the redundant portion, the output format of each source code analyzed by the third means, in accordance with a modify rule defined by the user.

6. The apparatus for generating a source code according to claim 4 or 5, wherein the second means comprises means for setting, before generating the source code adapted to each of the scripts read from the script file, a parameter in each script for changing the content that is outputted.

7. A program for causing a computer to create a source code using a script, comprising steps for causing the computer to function as:
a first means for reading from a script file a plurality of scripts for generating a source code;
a second means for generating a source code adapted to each script by executing the scripts that have been read;
a third means for analyzing each of the source codes that have been generated; and
a fourth means for combining the source codes that have been analyzed while sharing a redundant portion thereof, thereby outputting a combined source code.
